(19) Europäisches Patentamt
European Patent Office
Office européen des brevets

(11) **EP 1 047 264 B1**

(12) **FASCICULE DE BREVET EUROPEEN**

(45) Date de publication et mention
de la délivrance du brevet:
**09.05.2007 Bulletin 2007/19**

(51) Int Cl.:
***H04N 5/225*** *(2006.01)*

(21) Numéro de dépôt: **99400986.8**

(22) Date de dépôt: **22.04.1999**

(54) **Procédé et dispositif de traitement et de restitution d'images, à rééchantillonnage**

Vorrichtung und Verfahren zur Bildverarbeitung und -wiederherstellung mit erneuter Abtastung

Method and device for image processing and restitution with resampling

(84) Etats contractants désignés:
**ES FR GB GR IT**

(43) Date de publication de la demande:
**25.10.2000 Bulletin 2000/43**

(73) Titulaire: **Leo Vision**
**92170 Vanves (FR)**

(72) Inventeurs:
• **Dulin, Serge**
**77880 Grez sur Loing (FR)**
• **Richard, Gilles**
**75005 Paris (FR)**

(74) Mandataire: **Loisel, Bertrand et al**
**Cabinet Plasseraud**
**52 rue de la Victoire**
**75440 Paris Cedex 09 (FR)**

(56) Documents cités:
**EP-A- 0 729 275        WO-A-96/36179**
**US-A- 4 692 806        US-A- 5 128 776**
**US-A- 5 436 672        US-A- 5 444 478**
**US-A- 5 600 368        US-A- 5 745 305**

## Description

L'invention concerne le traitement et la restitution d'images vidéo constituées chacune d'une matrice de pixels et représentées par un signal qui proviendra habituellement d'une caméra, mais peut être un signal enregistré.

Elle vise notamment à apporter une solution simple au problème de la restitution d'une fraction sélectionnable de l'image vidéo d'origine avec éventuellement un effet de zoom.

La pratique actuelle de prise d'images d'une scène dans laquelle les centres d'intérêt se déplacent consiste à utiliser une caméra dont un cadreur fait varier l'orientation, le zoom et la mise au point pour fournir une image jugée optimale qui est ensuite diffusée et qui est visualisée telle quelle, sauf dans le cas où une troncature est nécessaire pour afficher une image au format (rapport largeur/hauteur) 16/9 sur un écran au format 4/3. Les seules modifications apportées éventuellement sont l'incrustation de sous-titres ou de symboles, l'image de fond restant inchangée.

L'invention utilise notamment le fait que les techniques actuellement disponibles de rééchantillonnage et d'interpolation permettent d'obtenir, à partir d'une image vidéo numérique du genre fourni par une caméra à haute définition, une représentation de qualité satisfaisante d'une fraction de l'image actuelle sous forme d'une matrice de pixels à une définition supérieure à celle trouvée dans la fraction de l'image. On peut utiliser pour cela les techniques désignées de façon générale par le terme anglo-saxon de "warping".

De telles techniques de warping sur une caméra fixe à grand champ sont décrites dans EP-0729275. La présente invention applique avantageusement ce type de technique pour l'incrustation virtuelle d'un modèle de synthèse ou d'une séquence vidéo dans une image acquise par une caméra fixe à grand champ et à définition supérieure à celle d'un organe de visualisation.

La technique pour l'incrustation virtuelle dans une image acquise par une caméra à champ et définition standard en utilisant une mémoire tampon pour enregistrer un ensemble d'images successives d'une séquence dans le but de supprimer des erreurs de substitution dans le cas où la cible est seulement partiellement visible dans l'image est connue par US 5 436 672.

La présente invention vise un procédé et un dispositif tels que visés respectivement aux revendications 1 et 9.

Un avantage majeur que procure l'invention consiste alors en ce que le modèle de synthèse ou la séquence vidéo résultant de l'incrustation virtuelle peuvent passer partiellement hors du champ de l'organe de visualisation sans affecter la qualité de l'incrustation virtuelle.

L'invention propose en conséquence un procédé de visualisation d'une séquence d'images vidéo sous forme d'une matrice de pixels, à partir d'un signal provenant d'au moins une caméra fixe à grand champ et à définition généralement supérieure à celle de l'organe de visualisation, qui a les particularités suivantes : on sélectionne de façon dynamique, dans le champ de la caméra, une zone de format correspondant à celui de l'organe de visualisation (généralement 4/3), on génère, par interpolation, à partir des pixels dans la zone sélectionnée de l'image fournie par la caméra, les pixels d'une image à la taille et à la définition de l'organe de visualisation.

Le procédé est d'autant plus aisément mis en oeuvre que les images successives d'une séquence vidéo présentent un degré de corrélation élevé, naturel et du au fait que la caméra est fixe, facilitant la mise en oeuvre de techniques de compression réduisant le débit de données nécessaires pour représenter une image à très haute définition.

Lorsqu'on utilise une caméra fixe unique, on lui donne une focale telle que l'ensemble de la scène apparaisse dans le champ. Cela conduit à une focale courte, facilitant la mise au point et permettant en général de la conserver en permanence.

La sélection du centre d'intérêt peut être faite par désignation de l'emplacement et de la taille de la zone ou "fenêtre" à visualiser. La sélection peut s'effectuer en régie de façon simple à l'aide d'un boîtier de commande à manche à balai ou à souris permettant de pointer un coin de la fenêtre et comportant un organe telle qu'un jeu de boutons poussoirs de commande du zoom.

Au lieu d'une seule caméra à grand champ, on peut utiliser plusieurs caméras ayant des champs individuels présentant un recouvrement pour limiter les effets de bord. Les images des caméras sont fusionnées en régie. Les caméras peuvent avoir des distances de mise au point différentes, pour tenir compte de la distance à laquelle elles se trouvent de la scène vers laquelle elles sont dirigées.

L'invention présente une grande souplesse de réalisation. Comme on le verra plus loin, la sélection de la fenêtre peut être effectuée en régie dans le cas d'une émission en direct en studio ; dans le cas contraire, elle peut être effectuée en tête d'un réseau câblé ou par un fournisseur d'accès Internet qui reçoit le signal d'origine par voie hertzienne, filaire ou satellitaire. Dans tous les cas, un cadreur n'est plus nécessaire derrière la caméra. Ou du moins il n'a plus qu'un rôle de réglage initial et éventuellement de modification de mise au point de la caméra.

L'invention peut s'appliquer à des images provenant :

- d'une caméra 16/9 haute définition du type disponible à l'heure actuelle, fournissant une matrice de 1920x1152 pixels, permettant de prélever directement une fenêtre de 720x576 pixels (ou autre) affichable sur les écrans actuels,
- d'une caméra unique spécialement développée et présentant une définition très supérieure à celle des caméras actuellement disponibles,

- de la fusion des images d'un faisceau de caméras.

Dans un premier mode d'exécution de l'invention, la fenêtre est sélectionnée par un opérateur en régie. L'image est diffusée (dans le cas par exemple d'une diffusion hertzienne) ou transmise (par exemple vers une tête de réseau, un satellite, un fournisseur d'accès Internet) dans l'état final. Cette solution a l'avantage de ne pas augmenter le débit numérique requis, sauf entre la caméra et la régie. L'opérateur en régie peut ainsi réaliser un panoramique ou un zoom par voie purement électronique, sans aucun déplacement de la caméra.

Dans un second mode d'exécution, la sélection est effectuée à l'arrivée par l'utilisateur. Le débit requis pour la liaison est alors notablement augmenté en cas d'utilisation d'un faisceau de caméras ou d'une caméra à très haute définition. Cette approche, du fait qu'elle requiert une très large bande passante, ne se prête bien qu'à la télévision professionnelle ou à la liaison entre un site de production et une tête de réseau qui ne diffuse ou ne retransmet qu'un débit réduit vers l'utilisateur.

Dans un autre mode encore d'exécution, applicable lorsque la liaison avec l'utilisateur final comporte une voie de retour, et lorsqu'il s'agit de transmission plutôt que de diffusion, le traitement peut être en deux étapes. L'utilisateur indique, par la voie de retour, une fraction déterminée de l'image globale qui contient la fenêtre qu'il veut observer. Les fractions que l'utilisateur peut choisir sont éventuellement prédéfinies. L'utilisateur sélectionne ensuite en local la position et la taille de la fenêtre qu'il veut observer dans la fraction qu'il reçoit. Le rééchantillonnage est effectué localement.

Cette solution est particulièrement adaptée à la télévision par Internet - ou plus généralement par un réseau étendu d'ordinateurs - car l'utilisateur dispose alors d'un ordinateur domestique ayant une puissance de calcul élevée. De plus, le nombre d'utilisateurs raccordé à un centre du fournisseur d'accès reste limité et en conséquence la mise en oeuvre est compatible avec la bande passante disponible, qui de toute façon doit être élevée au départ du centre, étant donné que les liaisons de type Internet sont individuelles.

Le signal de télévision haute définition est toujours soumis à une compression élevée, avant diffusion ou transmission. Cette compression est facilitée par la forte corrélation temporelle entre images successives d'une même séquence. Les modes de compression utilisés à l'heure actuelle, tels que les différentes variantes de la norme MPEG, sont parfaitement compatibles avec le procédé suivant l'invention.

Par ailleurs, on connaît un algorithme de compression dit "pyramidal", dont les principes de base sont notamment indiqués dans l'article "Pyramid-based extraction of local image features with applications to motion and texture analysis" SPIE vol 360 p. 114 de Peter J. Burt. Cet algorithme fournit une représentation sous forme d'un premier modèle, à très faible définition, et de modèles successifs ajoutant les données requises pour arriver à la définition maximale recherchée.

Dans un autre mode d'exécution encore, l'image d'origine est soumise à un tel traitement et la sélection provoque la transmission de données uniquement jusqu'au niveau nécessaire pour arriver à une résolution satisfaisante de la fenêtre sélectionnée à restituer, en tenant compte de l'étendue de cette fenêtre.

L'usage de l'algorithme pyramidal impose cependant une contrainte : le nombre d'échelles sélectionnable, donc de tailles de fenêtre, est limité.

La représentation d'une fenêtre obtenue par simple rééchantillonnage ne provoque pas les mêmes déformations ou flous optiques que génèrent les imperfections des optiques des caméras auxquelles est habitué le téléspectateur. Pour donner, à la visualisation, un aspect comparable à celui obtenu lors d'une diffusion directe du signal de télévision, on peut apporter une déformation artificielle sur les bords, en ajoutant, aux termes de zoom et de sélection de position de l'algorithme de rééchantillonnage, un terme de déformation donnant un effet comparable à celui d'une projection sphérique.

L'invention se prête particulièrement bien à la substitution d'une représentation d'un "modèle" ou "patron" constitué par une imagette de synthèse mémorisée ou par une séquence vidéo, à une "cible" désignée dans l'image fournie par la caméra. En effet, la caméra est fixe et il suffit en conséquence de pointer une fois pour toute la cible à remplacer. Une fois le modèle incrusté, la suite des opérations ou traitements est la même qu'en l'absence d'incrustation préalable.

L'invention propose également un dispositif permettant de mettre en oeuvre le procédé ci-dessus.

Les caractéristiques ci-dessus ainsi que d'autres apparaîtront à la lecture de la description qui suit de modes particuliers de réalisation, donnés à titre d'exemples non limitatifs. La description se réfère aux dessins qui l'accompagnent, dans lesquels :

- la figure 1 est un schéma montrant une fenêtre sélectionnée dans une image de télévision 16/9 et la représentation de cette fenêtre sur un organe de visualisation tel qu'un moniteur de télévision, quelques pixels seulemenet étant représentés par des croix ;
- la figure 2 montre un exemple de passage de pixels de l'image d'origine (représentés par des croix) aux pixels de l'image affichée (représentés par des points) ;
- la figure 3 montre les paramètres qui interviennent dans un algorithme de rééchantillonnage bilinéaire ;
- la figure 4 montre un recouvrement des champs (représentés respectivement en traits pleins, en tirets, en traits mixtes et en pointillés) de quatre caméras permettant d'obtenir un grand champ global ;
- la figure 5 est un organigramme de principe d'un dispositif ;
- la figure 6 montre une fraction d'un organigramme constituant une variante de celui de la figure 5 ;

- la figure 7 montre un exemple possible de répartition des fonctions entre les différents composants d'un système de diffusion en temps réel ; et
- la figure 8 montre un découpage prédéterminé de l'image d'origine.

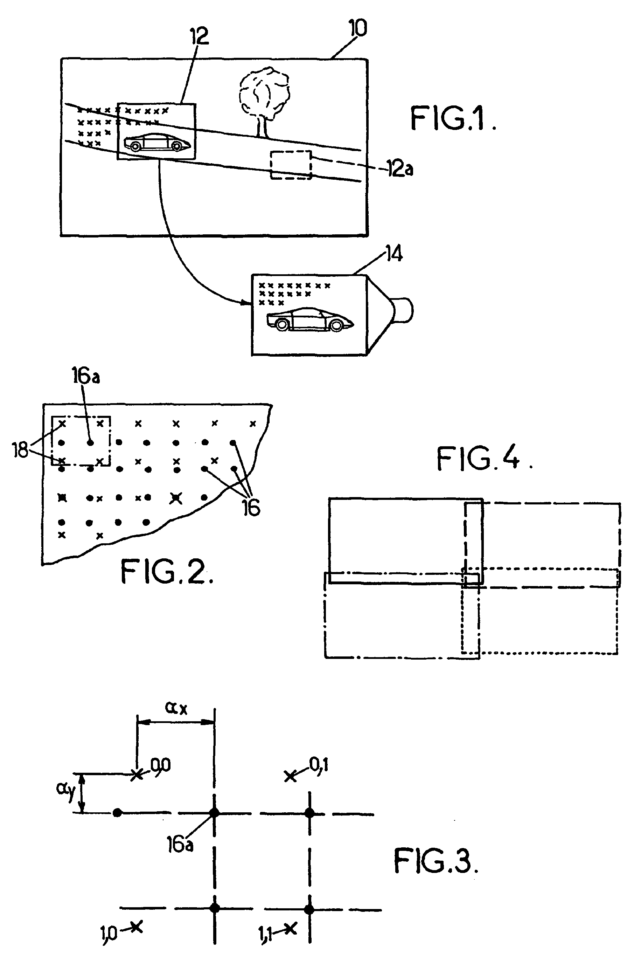

La figure 1 montre une image 10, au format 16/9, fournie par une caméra à haute définition, dans laquelle le procédé permet de sélectionner une fenêtre 12 au format 4/3, destinée à être restituée sur l'écran 14 d'un poste de télévision, sous forme d'une matrice de pixels comportant un nombre de pixels supérieur à celui que l'on trouve dans l'image d'origine et sans qu'il n'y ait en général coïncidence entre les pixels d'origine et certains des pixels restitués, comme le montre la figure 2 où les pixels 16 de l'image sur l'écran sont représentés par des points.

Il existe diverses techniques de rééchantillonnage permettant d'affecter une intensité radiométrique (brillance ou couleur) aux pixels 16. Une solution simple, mais qui ne donne que des résultats grossiers, consiste à assimiler chaque pixel de l'image restitué au pixel le plus proche de l'image primitive. On utilisera plutôt, en général, une interpolation bilinéaire permettant de calculer une intensité pour un pixel 16a de l'image finale à partir des intensités des quatre pixels d'origine 18 qui l'entourent, représentés dans un cadre en traits mixte sur la figure 2. Sur la figure 3, les pixels de l'image d'origine entourant le pixel 16a sont désignés par 0,0 ; 0,1 ; 1,0 et 1,1.

La première opération effectuée consiste à déterminer pour chaque pixel de l'image finale, ayant des coordonnées x, y sur la matrice de visualisation, les coordonnées x', y' de l'emplacement correspondant dans l'image d'origine. Cette correspondance est linéaire :

$$x' = Zx + D_x$$

et

$$y' = Zy + D_y.$$

Dans cette formule, Z désigne le degré de zoom et D désigne le déplacement global en x ou y.

Si on désigne alors par $\alpha x$ la partie décimale de x' et par $\alpha y$ la partie décimale de y' (figure 3), on peut calculer des coefficients de pondération de la forme :

$$\beta_{00} = (1-\alpha x)(1-\alpha y)$$

$$\cdots\cdots\cdots\cdots\cdots\cdots$$

$$\beta_{11} = \alpha x . \alpha y$$

Si l'on désigne alors par $I_{0,0}$, $I_{0,1}$, $I_{1,0}$ et $I_{1,1}$ les intensités radiométriques pour les quatre pixels d'origine, la valeur à affecter au pixel 16a sera $I = \beta_{0,0}.I_{0,0}+.....+ B_{1,1}.I_{l,l}$

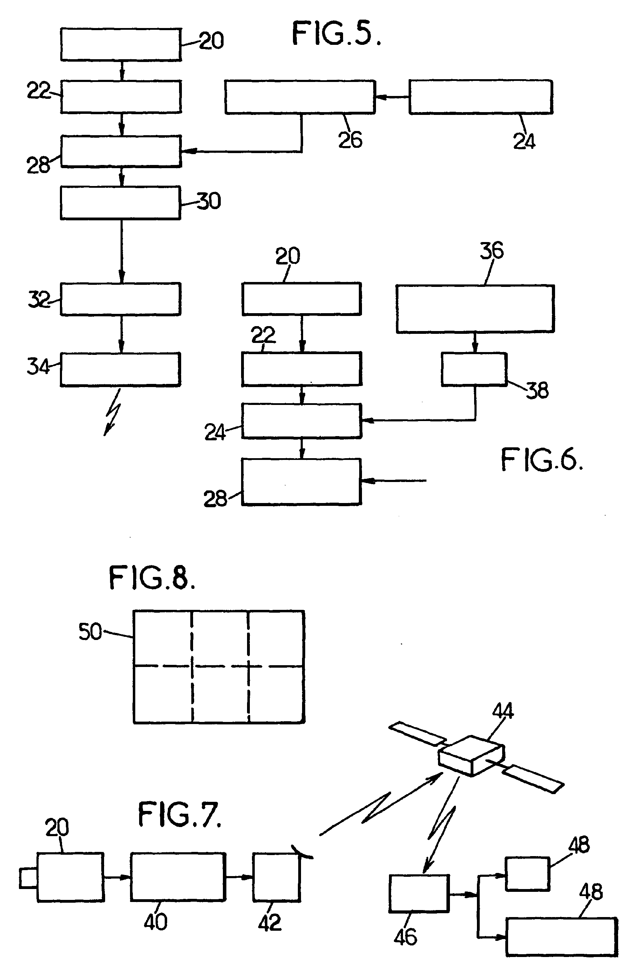

Comme l'indique la figure 5, la source 20, telle qu'une caméra, peut fournir un signal numérique haute définition à une mémoire d'image 22. Un boîtier 24 fournit les valeurs Z, D et Dx et Dy à un module 26, qui peut être matériel ou logiciel. Ce module calcule la position des pixels qui correspondent, dans l'image d'origine, aux pixels de la matrice de visualisation. Ces positions sont fournies à un module 28, matériel ou logiciel, qui effectue le rééchantillonnage nécessaire. Eventuellement, un module 30 effectue des corrections dans les zones de bord de l'image visualisée. Ces corrections peuvent aussi bien être effectuées au niveau du calcul de position, en ajoutant un terme correctif additif aux formules de passage de x, y à x', y'.

L'image est ensuite soumise à compression par des algorithmes qui peuvent être traditionnels et le signal modulant ainsi obtenu est adressé à un module de codage, de modulation et de diffusion 34.

Le même procédé est applicable lorsque l'image d'origine provient de la juxtaposition de plusieurs images 36. Dans ce cas, la source 20 est constituée par les caméras et par un module de fusion des images, effectuant une pondération dans les zones de recouvrement.

Dans une variante de réalisation montrée en figure 6, où les modules correspondant à ceux de la figure 5 sont désignés par le même numéro de référence, le rééchantillonnage 28 est précédé d'une incrustation d'un modèle, constitué par une séquence vidéo mise à l'échelle ou par un modèle de synthèse. Un module 36, qui est suivant le cas une source vidéo enregistrée en direct ou une mémoire contenant un modèle de synthèse, est utilisé. Un module 38 permet d'effectuer une sélection de la "cible" à remplacer dans l'image. Ce pointage de sélection peut être purement manuel, sans aucune opération de reconnaissance de forme, et être fait une fois pour toutes étant donné que l'image provenant de la source 20 est fixe. Les opérations ultérieures seront inchangées par rapport à celles de la figure 5.

Dans l'implémentation montrée en figure 7, les opérations de sélection et de rééchantillonnage sont effectuées en régie 40. L'opérateur sélectionne la fenêtre qui sera diffusée et peut par exemple la faire évoluer dans le temps de la position 12 à la position 12a de la figure 1. Le signal d'image ainsi obtenu est soumis en 42 à des opérations classiques de compression, de codage, de modulation et de transmission (éventuellement complétées par un embrouillage et/ou un chiffrage). Dans le cas illustré, le signal est émis sur une voie montante vers un satellite de retransmission 44 qui alimente une tête de réseau 46 distribuant ensuite le programme à des utilisateurs 48.

Dans une variante de réalisation, le signal transmis par le satellite 44 est le signal d'origine. Les opérations de sélection et de rééchantillonnage sont faites en tête de réseau. Cela permet par exemple à des opérateurs alimentant des pays différents d'effectuer des sélections différentes. On peut par exemple citer le cas de compétitions d'athlétisme où plusieurs épreuves se déroulent en même temps et où l'opérateur dans chaque pays choisira l'épreuve à laquelle participe un représentant du pays.

Dans un autre mode encore de réalisation, utilisable s'il existe une voie de retour, une possibilité de sélection limitée est offerte à l'utilisateur final.

Par exemple, l'image à grand champ d'origine 50 est fractionnée en plusieurs zones, limitée par des tirets sur la figure 8.

Il est alors possible d'offrir au moins deux possibilités à l'utilisateur-abonné :

- une première possibilité consiste à lui laisser choisir entre plusieurs fractions prédéfinies de l'image : dans ce cas la tête de réseau diffuse ou transmet vers lui uniquement la partie du signal qui représente la fraction choisie, ce qui est rendu facile par le mode de codage et compression spatiale habituel, qui travaille sur des pavés de 16 x 16 ou 8 x 8 pixels et utilise une transformée espace-fréquence ; la compression temporelle habituelle, par exemple MPEG. La tête de réseau peut former en plus un signal à très forte compression (par exemple au premier niveau d'un algorithme pyramidal) permettant d'avoir une vision grossière de la totalité du champ en vue d'une sélection.

Une autre solution, particulièrement intéressante pour la télévision par internet, c'est-à-dire sur un réseau d'ordinateurs où chaque souscripteur reçoit un signal qui lui est propre, consiste à adresser un signal codé par un algorithme pyramidal.

Dans ce cas, le souscripteur-utilisateur dispose d'une puissance de calcul qui lui permettra d'effectuer une décompression qui, selon l'étendue qu'il souhaite visualiser, sera obtenue en utilisant

- soit tous les niveaux de l'algorithme pyramidal (qui est un algorithme purement spatial), mais uniquement sur une fraction de signal représentant une fenêtre de faible étendue à visualiser,
- soit des niveaux bas de la représentation fournie par l'algorithme pyramidal, qui sera suffisante du fait de la définition élevée de l'image initiale, lorsqu'on veut représenter une fenêtre très étendue, voire même la totalité, de l'image d'origine.

## Revendications

1. Procédé de traitement d'une séquence d'images vidéo sous forme d'une matrice de pixels, à partir d'un signal provenant d'au moins une caméra fixe (20) à grand champ et à définition supérieure à celle d'un organe de visualisation (14), dans lequel :

   - on sélectionne de façon dynamique, dans le champ de la caméra, une zone de rapport largeur/hauteur correspondant à celui de l'organe de visualisation et
   - on génère, par interpolation, à partir des pixels dans la zone sélectionnée de l'image fournie par la caméra, les pixels d'une image à la taille et à la définition de l'organe de visualisation,

   **caractérisé en ce que** le procédé comporte une étape préalable dans laquelle :

   - on substitue, une fois pour toutes, dans l'image fournie par la caméra, une représentation d'un modèle de synthèse ou d'une séquence vidéo à une *cible* désignée dans l'image fournie par la caméra,

   la sélection dynamique de ladite zone intervenant après la substitution.

2. Procédé selon la revendication 1, **caractérisé en ce qu'**on désigne l'emplacement et la taille de la zone à visualiser à l'aide d'un boîtier de commande permettant de pointer un coin de la fenêtre et comportant un organe de commande de zoom.

3. Procédé selon la revendication 1 ou 2, suivant lequel on utilise une caméra fixe unique, de focale et de mise au point invariables.

4. Procédé selon la revendication 1 ou 2, suivant lequel on utilise plusieurs caméras ayant des champs individuels présentant un recouvrement pour limiter les effets de bord dont on fusionne les images.

5. Procédé selon l'une quelconque des revendications 1 à 4, **caractérisé en ce que** la zone est sélectionnée par un opérateur en régie.

6. Procédé selon l'une quelconque des revendications 1 à 4, **caractérisé en ce que** la zone est sélectionnée au niveau d'une tête de réseau qui reçoit l'image d'origine depuis un site de production et ne diffuse ou ne retransmet qu'un débit réduit vers l'utilisateur.

7. Procédé selon l'une quelconque des revendications 1 à 4, applicable lorsque la liaison avec l'utilisateur final comporte une voie de retour, **caractérisé en ce que** l'utilisateur indique, par la voie de retour, une fraction prédéterminée de l'image globale qui contient la zone qu'il veut observer et sélectionne la position et la taille de la zone dans la fraction qu'il reçoit, pour provoquer le rééchantillonnage en local.

8. Procédé selon l'une quelconque des revendications 1 à 4, applicable lorsque la liaison avec l'utilisateur comporte une voie de retour, et l'utilisateur dispose d'une puissance de calcul suivant lequel :

à l'émission, on comprime l'image d'origine par un algorithme pyramidal, et
à la réception, on effectue la sélection en utilisant :

- soit tous les niveaux de l'algorithme pyramidal (qui est un algorithme purement spatial), mais uniquement sur une fraction incorporant une fenêtre de faible étendue à visualiser, indiquée par la voie de retour,
- soit des niveaux bas de la représentation fournie par l'algorithme pyramidal, lorsqu'on représente une fenêtre étendue, de l'image d'origine.

**9.** Dispositif de traitement d'une séquence d'images vidéo, sous forme d'une matrice de pixels, à partir d'un signal provenant d'au moins une caméra fixe, à grand champ et à définition supérieure à une matrice de visualisation, comprenant :

un boîtier (24) de sélection du zoom et de l'emplacement d'une fenêtre à visualiser, dans le champ de la caméra, commandant un module (26) de calcul de la position des pixels qui correspondent, dans l'image d'origine, aux pixels de la matrice de visualisation ;
un module (28) qui effectue un rééchantillonnage à partir des indications reçues du module de calculs ; et
des moyens de compression, de codage, de modulation et de diffusion (34),

**caractérisé en ce que** le dispositif comporte en outre un module (38) de substitution de la représentation d'un modèle de synthèse ou d'une séquence vidéo à une "*cible*" désignée dans l'image fournie par la caméra,
et **en ce que** le boîtier de sélection de zoom (24) et le module de rééchantillonnage (28) sont agencés pour opérer sur des pixels d'image Que fournit le module de substitution (38),
lesdits moyens de compression, de codage, de modulation et de diffusion opérant alors sur des signaux correspondant aux pixels de la matrice de visualisation.

**Claims**

**1.** Method for processing a sequence of video images in the form of a matrix of pixels, on the basis of a signal originating from at least one fixed wide-field camera (20) with a definition greater than that of a visualization component (14), in which:

- a zone with a width/height ratio corresponding to that of the visualization component is dynamically selected in the field of the camera, and
- the pixels of an image with the size and definition of the visualization component are generated by interpolation on the basis of the pixels of the selected zone of the image provided by the camera,

**characterized in that** the method includes a prior step in which:

- in the image provided by the camera, a representation of a synthetic model or a video sequence is substituted once only for a target designated in the image provided by the camera,

the dynamic selection of the said zone taking place after the substitution.

**2.** Method according to Claim 1, **characterized in that** the location and size of the zone to be visualized are designated with the aid of a control unit, which makes it possible to pick a corner of the window and has a zoom control component.

**3.** Method according to Claim 1 or 2, according to which a single fixed camera having, invariable focal length and focusing is used.

**4.** Method according to Claim 1 or 2, according to which a plurality of cameras, having individual fields presenting an overlap in order to eliminate the edge effects, are used and their images are merged.

**5.** Method according to any one of Claims 1 to 4, **characterized in that** the zone is selected by a production operator.

**6.** Method according to any one of Claims 1 to 4, **characterized in that** the zone is selected in a network head which receives the original image from a production site and broadcasts or retransmits only a reduced rate to the user.

**7.** Method according to any one of Claims 1 to 4, applicable when the link to the final user includes a return path, **characterized in that** the user indicates via the return path a predetermined fraction of the overall image which contains the zone that they wish to observe, and selects the position and size of the zone in the fraction which they receive in order to cause in situ resampling.

**8.** Method according to any one of Claims 1 to 4, applicable when the link to the user includes a return path and the user possesses computing power, according to which:

the original image is compressed by a pyramidal algorithm at transmission, and
the selection is carried out at reception by using:

- either all the levels of the pyramidal algorithm (which is a purely spatial algorithm), but only on a fraction incorporating a window of small extent to be visualized, which is indicated via the return path,
- or low levels of the representation provided by the pyramidal algorithm, when an extended window of the original image is being represented.

9. Device for processing a sequence of video images in the form of a matrix of pixels, on the basis of a signal originating from at least one fixed wide-field camera with a definition greater than that of a visualization component, comprising:

a unit (24) for selecting the zoom and the location of a window to be visualized in the field of the camera, which controls a module (26) for calculating the position of the pixels which, in the original image, correspond to the pixels of the visualization matrix;
a module (28) which performs resampling on the basis of the indications received from the calculation module; and
means for compression, encoding, modulation and broadcasting (34),

**characterized in that** the device furthermore includes a module (38) for substituting the representation of a synthetic model or a video sequence for a "target" designated in the image provided by the camera,
and **in that** the zoom selection module (24) and the resampling module (28) are arranged in order to act on image pixels which the substitution module (38) provides,
the said means for compression, encoding, modulation and broadcasting then acting on signals corresponding to the pixels of the visualization matrix.

**Patentansprüche**

1. Verfahren zur Verarbeitung einer Videobildfolge in Form einer Pixelmatrix ausgehend von einem Signal, das von mindestens einer ortsfesten Großfeldkamera (20) mit einer höheren Auflösung als der einer Anzeigeeinrichtung (14) kommt, bei dem:

- im Feld der Kamera eine Zone mit einem Breite/Höhe-Verhältnis dynamisch ausgewählt wird, das demjenigen der Anzeigeeinrichtung entspricht, und
- ausgehend von den Pixeln in der ausgewählten Zone des von der Kamera gelieferten Bilds die Pixel eines Bilds entsprechend der Größe und der Auflösung der Anzeigeeinrichtung durch Interpolation erzeugt werden,

**dadurch gekennzeichnet, dass** das Verfahren einen vorhergehenden Schritt aufweist, in dem:

- ein für alle mal im von der Kamera gelieferten Bild eine Darstellung eines Synthesemodells oder einer Videobildfolge ein im von der Kamera gelieferten Bild bezeichnetes Ziel ersetzt,

wobei die dynamische Auswahl der Zone nach dem Ersetzen erfolgt.

2. Verfahren nach Anspruch 1, **dadurch gekennzeichnet, dass** die Stelle und die Größe der anzuzeigenden Zone mit Hilfe eines Steuergeräts bezeichnet werden, das es ermöglicht, auf eine Ecke des Fensters zu zielen, und das eine Zoomsteuereinrichtung aufweist.

3. Verfahren nach Anspruch 1 oder 2, gemäß dem eine einzige ortsfeste Kamera mit unveränderlicher Brennweite und Fokussierung verwendet wird.

4. Verfahren nach Anspruch 1 oder 2, gemäß dem mehrere Kameras mit individuellen Feldern verwendet werden, die eine Überdeckung aufweisen, um die Randwirkungen der zusammengesetzten Bilder zu begrenzen.

5. Verfahren nach einem der Ansprüche 1 bis 4, **dadurch gekennzeichnet, dass** die Zone von einem Regie-Operator ausgewählt wird.

6. Verfahren nach einem der Ansprüche 1 bis 4, **dadurch gekennzeichnet, dass** die Zone in Höhe eines Kopfendes eines Netzes ausgewählt wird, das das Ursprungsbild von einem Produktionsort empfängt und nur eine reduzierte Menge zum Benutzer sendet oder weiterleitet.

7. Verfahren nach einem der Ansprüche 1 bis 4, das anwendbar ist, wenn die Verbindung mit dem Endbenutzer einen Rückkanal aufweist, **dadurch gekennzeichnet, dass** der Benutzer über den Rückkanal einen vorbestimmten Bruchteil des globalen Bilds anzeigt, der die Zone enthält, die er beobachten will, und die Position und die Größe der Zone in dem von ihm empfangenen Bruchteil auswählt, um eine erneute lokale Abtastung auszulösen.

8. Verfahren nach einem der Ansprüche 1 bis 4, das anwendbar ist, wenn die Verbindung mit dem Benutzer einen Rückkanal aufweist und der Benutzer über eine Rechenleistung verfügt, gemäß der:

   beim Senden das Ursprungsbild durch einen Pyramidenalgorithmus komprimiert wird, und beim Empfang die Auswahl durchgeführt wird unter Verwendung:

   - entweder aller Stufen des Pyramidenalgorithmus (der ein rein räumlicher Algorithmus ist), aber nur an einem Bruchteil, der ein anzuzeigendes Fenster geringer Ausdehnung enthält, das vom Rückkanal angezeigt wird,
   - oder der niedrigen Stufen der vom Pyramidenalgorithmus gelieferten Darstellung, wenn man ein ausgedehntes Fenster des Ursprungsbildes darstellt.

9. Vorrichtung zur Verarbeitung einer Videobildfolge in Form einer Pixelmatrix ausgehend von einem Signal, das von mindestens einer ortsfesten Großfeldkamera mit einer größeren Auflösung als eine Anzeigematrix kommt, mit:

   einem Gerät (24) zu Auswahl des Zooms und der Stelle eines im Feld der Kamera anzuzeigenden Fensters, das einen Modul (26) zur Berechnung der Position der Pixel steuert, die im Ursprungsbild den Pixeln der Anzeigematrix entsprechen;
   einem Modul (28), der ausgehend von den vom Rechenmodul empfangenen Angaben eine erneute Tastung durchführt; und
   Kompressions-, Codier-, Modulations- und Sendemitteln (34),
   **dadurch gekennzeichnet, dass** die Vorrichtung des Weiteren ein Modul (38) zum Ersetzen eines im von der Kamera gelieferten Bild bezeichneten "Ziels" durch die Darstellung eines Synthesemodells oder einer Videobildfolge aufweist,
   und dass das Zoomauswahlgerät (24) und das Modul (28) zum erneuten Abtasten so ausgelegt sind, dass sie die Bildpixel verarbeiten, die vom Modul (38) zum Ersetzen geliefert werden,
   wobei die Kompressions-, Codier-, Modulations- und Sendemittel dann auf Signale einwirken, die den Pixeln der Anzeigematrix entsprechen.

FIG.1.

FIG.4.

FIG.2.

FIG.3.

FIG.5.

FIG.6.

FIG.8.

FIG.7.